# EUROPEAN PATENT SPECIFICATION

(11) **EP 1 777 152 B1**
(45) Date of publication and mention of the grant of the patent: **20.02.2008**
(21) Application number: 06386025.8
(22) Date of filing: 20.07.2006
(51) Int. Cl.: B63B 21/00, B63B 21/54

(54) **Quick release, remote and retrievable mooring arrangement**
Rückziehbare ferngesteuerte Schnellentrigelungsverankerungsvorrichtung
Système de libération rapide récupérable et commandée à distance pour l'ancrage d'un bateau

(30) Priority: 20.10.2005 GR 2005100530
(43) Date of publication of application: 25.04.2007
(73) Proprietor: Arapogiannis, Dimitrios, 14231 N. Ionia Attikis (GR)
(72) Inventor: Arapogiannis, Dimitrios, 14231 N. Ionia Attikis (GR)

(56) References cited:
- WO-A-02/30735
- FR-A- 2 720 130
- US-A- 4 751 892
- US-A- 5 538 303

## Description

The invention refers to seamanship and specifically to the autonomous engagement and disengagement of stem fast of vessels by their own restraining gear at the land or at buoys.

The usual technique of stem fast of a cruise vessel on its own means, is achieved when the vessel "lowers" its own self-reliant floating means (boat with crew) which receive the restraining gear (ropes, wire ropes, chains) and after having approached the land they carry out the tying up of the ship to land or to a buoy, in order to secure and keep it in the desirable place.

For the disengagement from the land, either scheduled or required because of unfavorable weather conditions, a procedure must be applied that brings crew and boat outside the vessel, having to approach the land and proceed in its disengagement from the restraining gear.

From that point forward the vessel should start her engines.

The boat will come alongside the vessel, the crew then prepare and perform its lifting onboard; tasks which may need to be executed while the ship is rolling.

The method according to this invention aims at the secure stem fast according to the classic technique, it provides however the possibility of rapid and self-reliant disengagement from the situation of stem fast and the unhooking and collection of the restraining means back to the ship, from aboard, whenever it is required.

This is achieved without needing somebody to untie the line from outside the ship, or exposing crew and boat to this process, or having to drop the restraining gear into the sea if there is a need for immediate disengagement.

It does not also require any concrete fixed point of land as e.g. mooring eyes or mooring rings (man-made points) which are provided only in an organized jetty or quays or points for stem fast (docking) where solutions could be given from documents GB 820109 /TAYLOR or EP 644340A/ RINGROSE or FR-A-2720130 (NAGET GUY [FRD]) 24 November 1995 (1995-11-24) and especially D1: WO 02/30735 A (STOJACOVIC IVAN [FRD 18 April 2002 (2002-4-18) which operates ONLY where human interference has already been involved by making mooring eyes or rings but the novel according to the invention is the capability of a long distance stem fast mooring to ANY natural firm point of land (rock, tree...) available for safe mooring and which can be encircled by part of the mechanism (like chain or cable rope). The system corresponds to all the real sea state conditions of operation without being influenced by possible twisting of the long line when it is under tension by the means of the ship (windlass) or by the pitching of the ship and does not leave any additional means of restrain at the mooring points. Thus it makes the long distance mooring and the disengagement self reliant and autonomous achieving safe stem fast one step beyond i.e. to any natural firm point of land. Disengagement and collection of all restraining means is performed from aboard.

According to the invention this is achieved by means of the stainless mechanism that ensures the remote disengagement from the situation of stem fast, since it allows handling from aboard the disengagement of the restraining gear that encircle the already selected point in the land (rock, tree) and the collection of all means back to the ship.

The disengagement is achieved through the stretching of a secondary rope in the parallel direction of the main restraining means, where the secondary rope pulls and drags the pin of the mechanism which is under the tension of the spring.

### The advantages of this method are the following:

Crew and boat can come aboard after having completed the stem fast since they are not needed for the disengagement of the ship, ensuring less time for the process, less exposure of the crew to danger, less fatigue of the cranes for the lifting of the boat because it is realized under smaller angle of rolling since most likely the ship is restrained by the anchor in the bow and the line at the stem.

It ensures self-reliant and rapid disengagement from the situation of stem fast at will.

It does not allow the accidental disengagement for as long as the main restraining means (line - rope) is under tension.

It reduces the time of operation of the Main Engines of the ship at idle speed and as a result it achieves economy in fuel consumption taking into considaration that at idle condition the consumption of fuel is of the order of 180 gr./Hp*h since these engines usually require and provide great horsepower for such ships.

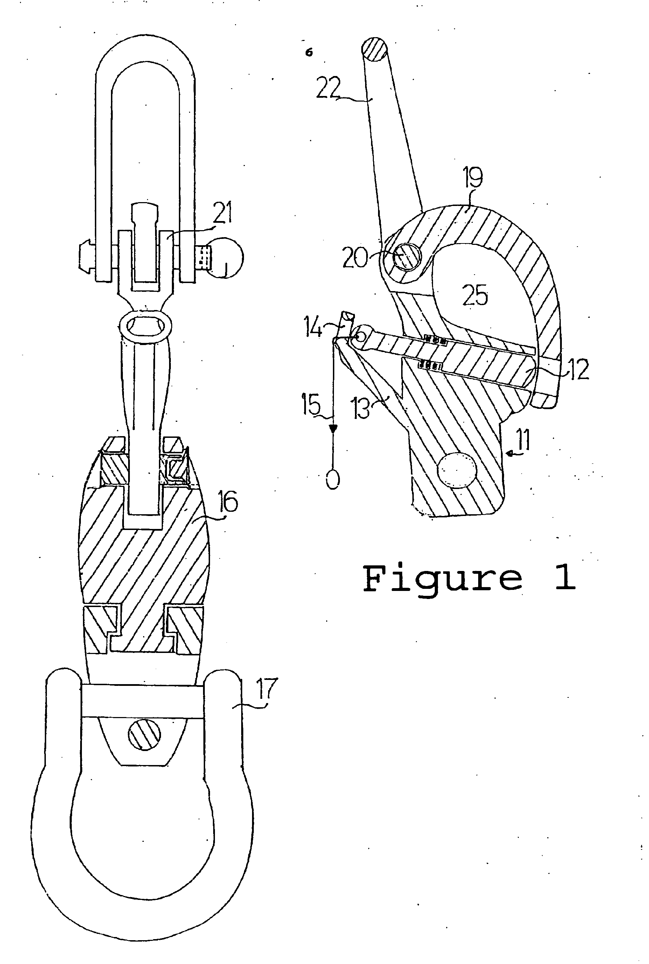

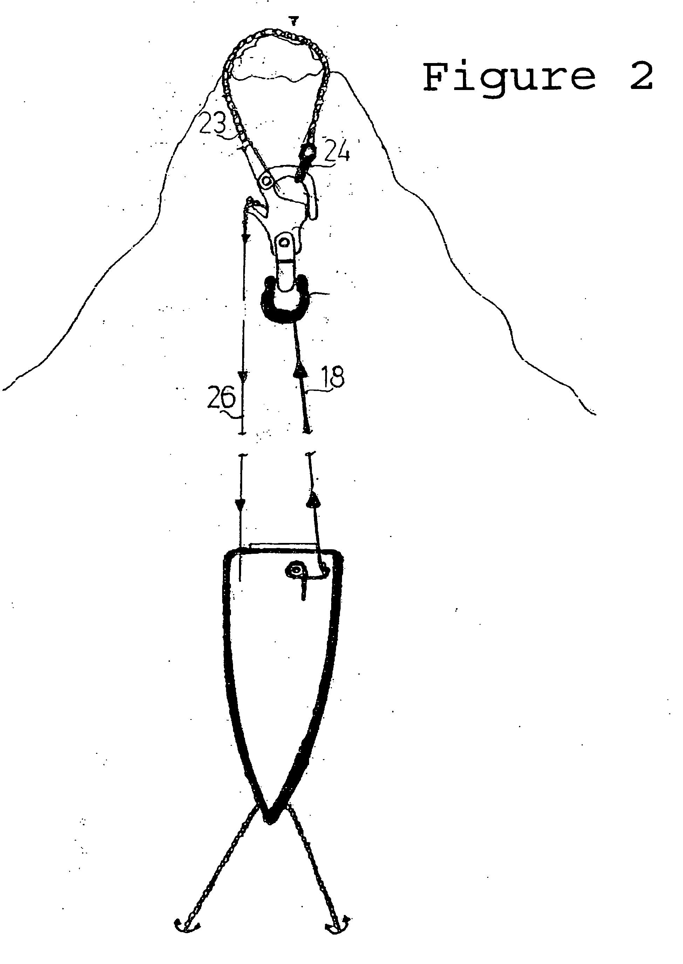

The invention is described by the analysis of operation of the stainless mechanism, its composition, and with reference to the attached figures 1 and 2.

In figure 1 the mechanism appears in section; a swivel snap shackle (11) with firm eye bolt, modified constructionally so as to allow the shift of the locking pin (12) in the desirable direction and turn.

The arm (13) of the hook is placed under a suitable angle which allows the shifting of the pin (12) while a stretching force is applied in the range by 0 degrees to about 110 degrees in the direction of the pin's shifting. At the end of the arm (13) there is an eye (14) through which a stainless wire rope passes (15) and is connected with the pin (12).

In the lower part of the swivel snap shackle (11) there is an eye bolt where an anchor swivel jaw a jaw (16) is connected at the one end. At the other swivel end an omega big bow shackle (17) is connected.

At this key the main constraining means will be connected (18) which will be tied up to the vessel.

At the upper part of the swivel snap shackle (11) there is a moving bolt (19) which at the one end secures to the locking pin (12) while at the other end is connected through the pin (20) with the hook so that it allows the movement of the bolt (19).

From the same pin axis (20) and outside the base of the swivel snap shackle (11) a long swivel snap shackle is connected (22) which is able to move around the pin's axis.

At the end of the D key (22) the one end of the encircling medium of restraint (23) will be connected so that it "embraces" the firm point of mooring on the land.

At the other end of the encircling medium, a small omega key (24) is connected which can either be engaged to the eye (25) created by the bolt (19) secured in pin (12) or be released when we choose to disengage by stretching the secondary rope (26) in the parallel direction of the primary restraining medium (18) and remotely.

An example of operation of the method under real conditions is described below (figure 2).

A ship enters a gulf intending to stem fast. It lowers the boat with crew and the restraining means. She drops the anchor and approaches the land with her stern, maintaining a safe distance from it. The ship selects the suitable firm point of securing in the land, a rock for this example. The fitter regulates proportionally to the mooring point, the length of the encircling chain (23) from the end of D shackle (22) so that when the primary is under tension (18) the chain's ends will form the desirable angle bigger than 45 degrees. The fitter encircles the point and he secures the free end of the chain with the small omega key (24) passing it in the "eye" (25).

The fitter will then tie up the end of the tow (18) to the omega bow shackle (17) and he will transport the other end of the tow to the ship, where it is tied up ensuring the desirable position of ship. After the stem fast is ensured, the fitter passes to the wire rope (15) a secondary rope (26) which he unfolds and transports at the same time with the primary tow (18) onboard the ship.

From this moment onwards the system is ready to function at will.

The docking boat is raised and secured, with the vessel retained from two points at 180 degrees with the least rolling and hence with more safety and all crew onboard. When disengagement from the land is required, tension is applied to the secondary rope (26) and the tension of the primary is reduced (18) from inside the ship so that automatically the pin's safety is unlocked (12), the tension at the end of the chain (24) opens the moving bolt (19) and releases it.

By pulling the tow we also bring the mechanism and the surrounding chain (all the means of restraint) back inside the ship. Simultaneously we gather (we wrap) the secondary rope (26) as well. The ship now is ready to heave up the anchor and sail.

The aim of the anchor swivel (16) is to receive rotating tensions of the line which are developed periodically during the tension by the ship's pitching up and down; tensions which would twist the chain and would stop the disengagement.

The joint of the swivel snap shackle's connection (11) - anchor swivel (16) and omega bow shackle (17) is intended to receive the tensions in the four axes so that the mechanism remains in the desirable place.

The method has been tried so far by the inventor in a motor yacht of 30 meters long and 110 tons of total weight for more than 60 times, under real conditions, various weather conditions from calm to strengthened winds and sea states and has coped with all these with equal success.

## Claims

1. A remote mooring release method between a vessel and any natural firm point of land which is available for mooring and can be encircled by part of the mechanism like chain or wire rope that is **characterized by** the autonomous disengagement from aboard by means of stretching a release mechanism that also brings back onboard the ship the whole of the restraining gear.

2. A stainless steel release mechanism which is the means for the realization of the method, is **characterized by** the fact that it consists of a swivel snap shackle (11) with firm screw so as to allow the movement of the locking pin (12) towards the desirable direction and turn, the arm (13) positioned under a suitable angle to allow the movement of the pin (12) while a stretching force is applied into a range of 0 to 100 degrees towards the movement direction of the pin, at the end of the arm there is a eye (14), through which a stainless steel wire rope passes (15) and is connected to the pin (12), at the bottom of the swivel snap shackle (11) there is a firm eye bolt which connects the one end with the anchor swivel (16), and at the other end of the swivel an omega big bow shackle (17) is connected on which the main restraining means is connected (18) and tied on the upper part of the swivel snap shackle (11) where a moving bolt (19) exists whose one end secures the locking pin (12) while the other end is connected through the pin (20) with the hook so as to allow the movement of the bolt (19), from the same pin axis (20) and outside the swivel snap shackle's base (11), a long D shackle (22) is connected which can move around the pin's axis (20), at its end (22), will be connected to the one end of the surrounding chain (23) that embraces the constant point of restrain on the land, at the other end of the chain's a small omega bow shackle (24) is connected which can be either engaged to the eye (25) created by the bolt (19) secured to the pin, or be disengaged when choosing to release by stretching the secondary rope (26) in parallel direction of the primary restraining medium (18) remotely.

3. A stainless steel release mechanism according to claim 2 **characterized** firstly by the fact that at its one end (22) the one end of the surrounding chain (23) is constrained firmly embracing the distant firm point of land and the other end through the small omega bow shackle (24) will get into the eye (25) so that it can be released at the fitter's - user's will when the pin (12) is dragged and secondly it is **characterized by** the arm (13) positioned under a suitable angle so that the pin (12) is dragged due to the stretching of the stainless wire rope (15).

## Patentansprüche

1. Die Methode zur Entsicherung der Festmachung zwischen dem Boot und welchem festen natürlichen Punkt auch immer des Festlandes, der umschlossen werden kann, aus der Entfernung (2) ist durch das gewünschte und selbsttätige Ausklinken aus der Heckvertäuung durch das Spannen des Entsicherungsmechanismus vom Boot aus **gekennzeichnet**, sodass die Wirkung der Spannung den Haltebolzen des besagten Entsicherungsmechanismus freimacht und folglich zum einen das Boot von dem festen Punkt auf dem Festland ausgeklinkt wird und zum anderen im Boot alle Mittel zum Festmachen und Festhalten an denselben Punkt eingeholt werden, von dem aus die Entsicherung vorgenommen wird.

2. Der rostfreie Entsicherungsmechanismus, der das Mittel für die Durchführung der Methode ist, ist **dadurch gekennzeichnet, dass** er aus einem Haken (11) mit einem stabilen Augbolzen besteht, damit er das Verstellen des Sicherungsbolzens (12) in die gewünschte Richtung und den gewünschten Anlauf gestattet, der Arm (13), der im geeigneten Winkel platziert ist, gestattet die Verstellung des Bolzens (12), während Spannkraft innerhalb einer Breite von 0 Grad bis ungefähr 110 Grad gemäß der Richtung der Verstellung des Bolzens angewendet wird, am Ende des Arms (13) gibt es ein "Auge" (14), durch das ein rostfreies Drahtseil (15) führt, das mit dem Bolzen (12) verbunden ist, am unteren Rand des Hakens (11) gibt es einen stabilen Augbolzen, in den das eine Ende von einer Ankerscheibe (16) angeschlossen wird, im anderen Ende der Scheibe wird ein großer Bügelschäkel (17) angeschlossen, in diesem Schäkel wird die Haupthalterichtung (18) angeschlossen, welche auf dem Schiff festgemacht wird, auf dem oberen Teil des Hakens (11) gibt es einen beweglichen Schnapper (19), dessen eines Ende im Sicherungsbolzen (12) sichert, während das andere Ende durch einen Bolzen (20) mit dem Haken verbunden wird, sodass er die Bewegung des Schnappers (19) gestattet, durch dieselbe Achse des Bolzens (20) und außerhalb der Halterung des Hakens (11) wird ein langer Schäkel (22) angeschlossen, der sich um die Bolzenachse (20) bewegen kann, am Ende des Schäkels (22), der verbindet und die Möglichkeit der Erhöhung oder Minderung der Länge des Festhaltemittels zum Umschließen (23) gibt und der den stabilen Festhaltepunkt auf dem Festland "umarmt", am anderen Ende des Mittels zum Umschließen (23) wird ein kleiner Bügelschäkel (24) angeschlossen, der entweder an dem "Auge" (25) festgemacht werden kann, das durch den am Bolzen (12) gesicherten Schnapper (19) entsteht, oder bei der Wahl der Entsicherung losgemacht werden kann, indem das Nebenmittel (26) in die parallele Richtung zum Hauptfesthaltemechanismus (18) ebenfalls aus der Entfernung gespannt wird.

3. Der rostfreie Entsicherungsmechanismus ist in Einklang mit Anforderung 2 zum einen **dadurch gekennzeichnet, dass** an seinem einen Ende (22) das Ende der Umschließungskette (23) festgehalten wird, die den weiten stabilen Festhaltepunkt auf dem Festland umschießt, und dass ihr anderes Ende mittels des kleinen Bügelschäkels(24) in dem Auge (25) eingeschlossen ist, damit er gemäß dem Willen des Anwenders bzw. Operateurs frei gemacht wird, wenn der Bolzen (12) gezogen wird und zum anderen durch den in geeigneten Winkel platzierten Arm (13), sodass der Bolzen (12) wegen der Spannung des rostfreien Drahtseils (15) gezogen wird.

## Revendications

1. Un système de déverrouillage a distance (2) de l'amarrage entre le navire et tout point fixe naturel terrestre qui peut être ceinturé de la part du mécanisme cad le chaîne on une tige de rappel qui est **caractérisé par** le déblocage souhaité et autonome de l'amarre avec la traction du mécanisme de déverrouillage dans le navire afin que l'effet de la traction libère la goupille d'attache du mécanisme de déverrouillage en question et par conséquent que le navire se désancre du point fixe terrestre d'une part et que tous les moyens d'attache et de fixation au même point d'où le déverrouillage est exécuté soient rassemblés dans le navire, d'autre part.

2. Un mécanisme de déverrouillage inoxydable qui constitue le moyen de réalisation de la méthode, est **caractérisé** de ce qu'il est constitué d'un crampon (11) avec anneau fixe afin de permettre le déplacement de la goupille de fixation (12) dans la direction et le sens souhaité, le bras (13) placé dans un angle adéquat permet le déplacement de la goupille (12) tandis qu'une force de traction est exercée dans une amplitude de 0 degrés a 110 degrés environ dans la direction de déplacement de la goupille, a l'extrémité du bras (13) il y a un « oeillet » (14) dans lequel passe un câble (15) qui est relié a la goupille (12) au coté inférieur du crampon (11) il y a un anneau fixe auquel est relié l'une extrémité de l'émerillon de l'ancre (16) et a l'autre extrémité de l'émerillon, un grand maillon oméga (17), a ce maillon le moyen d'attache principal sera lié (18) qui attachera le navire, a la partie supérieure du crampon (11) il y a un loquet mobile (19) dont l'une extrémité bloque la goupille d'attache (12) tandis que l'autre extrémité est reliée par la goupille (20) au crampon afin de permettre la motricité du loquet (19), par le même axe de la goupille (20) et en dehors de la base de la goupille (11) un long maillon est relié (2)) qui est capable de se mouvoir sur l'axe de la goupille (20), a l'extrémité du maillon (22) qui est relié et offre la possibilité de raccourcir et rallonger la longueur du moyen d'attache d'enlacement (23) et qui embrassera le point fixe d'attache a terre, a l'autre extrémité du moyen d'enlacement (23) un petit maillon oméga est relié (24) qui peut être fixé sur « l'oeillet » (25) qui est créé par le loquet (19) bloqué sur la goupille (12) et soit pour être débloqué lors de la sélection de déblocage par l'exercice d'une traction sur le moyen secondaire (26) lors de la direction parallèle du moyen d'attache primaire (18) et a distance.

3. Le mécanisme inoxydable de déblocage, conformément a l'exigence 2 qui est d'une part **caractérisé** de ce qu'a l'une de ses extrémités (22) l'une extrémité de la chaîne d'enlacement (23) est tenue fixe, qui embrasse le point fixe éloigné d'attache sur terre et l'autre extrémité sera verrouillé a l'oeillet (25) par un petit maillon oméga (24) afin d'être libéré selon la volonté du manipulateur lorsque la goupille (12) est glissée et d'autre part, par le bras (13) placé en angle adéquat afin de faire glisser la goupille (12) en raison de traction du câble inoxydable (15).
